# EUROPÄISCHE PATENTSCHRIFT

(11) **EP 4 094 553 B1**
(45) Veröffentlichungstag und Bekanntmachung des Hinweises auf die Patenterteilung: **09.10.2024**
(21) Anmeldenummer: 22172448.7
(22) Anmeldetag: 10.05.2022
(51) Int. Cl.: A01B 39/16, A01B 39/19, A01B 39/24, A01B 61/04

(54) **GERÄT FÜR DEN EINSATZ IN DER LANDWIRTSCHAFT**
DEVICE FOR USE IN AGRICULTURE
APPAREIL DESTINÉ À ÊTRE UTILISÉ EN AGRICULTURE

(30) Priorität: 17.05.2021 DE 102021204969
(43) Veröffentlichungstag der Anmeldung: 30.11.2022
(73) Patentinhaber: Clemens GmbH & Co. KG, 54516 Wittlich (DE)
(72) Erfinder: Clemens, Patrick, 54484 Maring-Noviand (DE)
(74) Vertreter: Bardehle Pagenberg Partnerschaft mbB Patentanwälte Rechtsanwälte

(56) Entgegenhaltungen:
- WO-A2-2008/135867
- DE-A1- 19 631 555
- DE-A1- 3 819 315
- KR-B1- 100 633 396

## Beschreibung

### 1. Gebiet der Erfindung

Die vorliegende Erfindung betrifft ein Gerät für den Einsatz in der Landwirtschaft, insbesondere für Reihenkulturen, wie beispielsweise den Wein- oder Obstanbau, wobei das Gerät vorzugsweise zur Befestigung an einem Trägerfahrzeug eingerichtet ist und zweckmäßig zur Bearbeitung von Böden, Pflanzen, Rebstöcken oder sonstigen Nutzpflanzen angewendet werden kann.

### 2. Hintergrund

Aus dem Stand der Technik sind eine Vielzahl von Geräten für den Einsatz in der Landwirtschaft bekannt. Beispielsweise sind Unterstockkreisel, insbesondere Zinkenkreisel, mit oder ohne Flachschar zur Entfernung von Unkraut im Boden bekannt. Zur Entfernung von übermäßigem Laub sind beispielsweise Entlauber vorbekannt. Entlauber können zudem in Kombination mit einem Messerbalken eingesetzt werden, das wie ein Doppelmesser wirkt und sich translatorisch hin- und herbewegt. Entlauber selbst bestehen aus zwei gegenläufig rotierenden Walzen wobei die eine Walze vorzugsweise aus einem Vollmaterial und die andere Walze perforiert ausgestaltet ist, um dadurch Blätter ansaugen zu können. Ein weiteres Beispiel ist eine Rotorbürste, mit der Gras und/oder Unkraut gemäht und gemulcht werden kann.

Unterstockkreisel bzw. Zinkenkreisel sind Werkzeuge, die in den Boden eingreifen und durch eine Rotationsbewegung unerwünschtes Unkraut im Boden lösen und durch die Rotationsbewegung je nach Drehrichtung von der Rebzeile wegbewegen oder zu der Rebzeile hinbewegen können. Der Unterstockkreisel bzw. Zinkenkreisel wird teilweise in Kombination mit einer Flachschar verwendet, der im Unterboden Wurzeln abschneiden kann und zusammen mit dem Unterstockkreisel bzw. Zinkenkreisel zur effektiven Entfernung von Unkraut eingesetzt werden kann.

Die Werkzeuge werden üblicherweise hydraulisch oder elektrisch von Motoren angetrieben und sind an einem Trägerfahrzeug, wie etwa einem Traktor, einer Raupe, einem Hochradschlepper o. Ä., montiert.

Die zuvor genannten Geräte können beim Einsatz durch im Boden befindliche Steine, durch Unkraut oder trockene Gräser oder in den zu bearbeitenden Nutzpflanzen befindliche Hindernisse, wie etwa starke Äste o.Ä., in ihrem Arbeitsablauf gestört werden. Häufig ist es notwendig, dass der Anwender das Werkzeug manuell ansteuern muss, um eine vorliegende Beeinträchtigung zu lösen. Da auch eine Mehrzahl an Werkzeugen gleichzeitig an einem Trägerfahrzeug zum Einsatz kommen kann, stellt dies eine enorme Herausforderung für den Anwender dar. Insbesondere wenn sich die Werkzeuge nicht im Sichtfeld des Anwenders befinden kann dieser die Störung zudem oft nicht rechtzeitig erkennen und das Werkzeug arbeitet dann eine Zeitlang bis zur Behebung der Störung ineffizient.

Die DE 3819 315 A1 betrifft eine Drehegge zur Bearbeitung der Bodenstreifen zwischen Obstbaumreihen, insbesondere in jungen Pflanzungen, mit drehbar gelagerter, mit Zinken versehener Scheibe.

Die DE 196 31 555 A1 betrifft einen kabellosen elektrischen Rasenmäher mit einem Energieregelsystem.

Die WO 2008/135867 A1 betrifft Präzisionsjätmaschinen.

Die KR 100 633 396 B1 betrifft einen Rasenmäher für einen Bagger, um Unkraut am Ufer, am Flussufer oder auf weiten Feldern zu schneiden.

Ausgehend von diesem Stand der Technik stellt sich die Erfindung die Aufgabe, ein Gerät mit einer Antriebsvorrichtung zum Bewegen eines Werkzeugs und einer Steuervorrichtung bereitzustellen, wobei das Gerät derart eingerichtet ist, dass die oben genannten Nachteile des Standes der Technik überwunden werden können. Insbesondere stellt sich die Aufgabe, ein Gerät bereitzustellen, das eine verbesserte und vereinfachte Bearbeitung von Böden oder Nutzpflanzen im Bereich der Landwirtschaft ermöglicht. Diese Ziele sollen insbesondere mit einem Gerät erreicht werden, bei dem Beeinträchtigungen des Werkzeugs schnell und effizient gelöst werden können.

Diese und andere Aufgaben, die beim Lesen der folgenden Beschreibung noch genannt werden oder vom Fachmann erkannt werden können, werden mit einem Gerät nach einem der unabhängigen Ansprüche 1 oder 2, sowie einem Trägerfahrzeug nach Anspruch 14 gelöst. Vorteilhafte Weiterbildungen sind in den Unteransprüchen beschrieben.

### 3. Ausführliche Beschreibung der Erfindung

Das erfindungsgemäße Gerät ist für den Einsatz in der Landwirtschaft, insbesondere für Reihenkulturen, wie beispielsweise den Wein- oder Obstanbau, geeignet und umfasst eine Antriebsvorrichtung sowie eine Steuervorrichtung. Die Antriebsvorrichtung stellt mindestens einen messbaren Parameter bereit und ist dazu eingerichtet ein Werkzeug zu bewegen. Die Antriebsvorrichtung kann dabei hydraulische oder elektrische Motoren umfassen. Insbesondere hydraulische Antriebe sind in der Landwirtschaft weit verbreitet, da diese besonders robust sind und der hydraulische Druck vom Traktor bereitgestellt werden kann, so dass keine eigene Pumpe am Gerät benötigt wird. Die Komponenten des Geräts, wie insbesondere die Steuerung oder Mittel zur Erfassung des Parameters, müssen nicht zwingend direkt am Gerät angeordnet sein oder in unmittelbarer Nähe zueinander, sondern können auch entfernt davon bzw. voneinander eingerichtet sein. Bspw. kann die Steuereinrichtung auch am Trägerfahrzeug montiert sein und falls als Parameter der hydraulische Druck verwendet wird kann dieser auch an der Pumpe am Trägerfahrzeug gemessen werden.

Das angetriebene Werkzeug kann beispielsweise zur Bearbeitung von Böden insbesondere bei der Unkrautentfernung und/oder zur Bearbeitung von Nutzpflanzen wie etwa Weinreben oder Obstbäumen zum Einsatz kommen, um störende Blätter zu entfernen. Die mechanische Unterstockbearbeitung, so wie sie hier beschrieben wird, hat neben der Unkrautbekämpfung den vorteilhaften Effekt eines Kapillarbruchs, durch den die Wasservorräte des Bodens geschont werden. Weiterhin wird gegenüber dem Einsatz chemischer Herbizide die Umweltbelastung verringert. Es sind auch weitere bewegbare Werkzeuge denkbar und vom Prinzip der vorliegenden Erfindung umfasst, die für den Fachmann beim Lesen der Beschreibung in naheliegender Weise ersichtlich sind. Die Steuervorrichtung ist dazu eingerichtet eine Bewegungsveränderung des Werkzeugs durchzuführen, wobei die Bewegungsveränderung ausgelöst wird, wenn der mindestens eine messbare Parameter einen einstellbaren Grenzwert für einen Zeitbereich von mehr als 0 Sekunden über oder unterschreitet. Dieser Zeitbereich, der für das Auslösen relevant ist, ist dem Fachmann auch als Totzeit bekannt und kann beim Lesen der Beschreibung synonym aufgefasst werden. Die Bewegungsveränderung des Werkzeugs kann dabei einen oder mehrere der folgenden Vorgänge umfassen: Bewegungsumkehr, Beschleunigung, Abbremsung, höhere Geschwindigkeit, niedrigere Geschwindigkeit, Änderung der Position des Werkzeugs und ähnliches. Beispielweise kann die Bewegungsveränderung mehrere, kurz hintereinander durchgeführte sehr schnelle Umkehrungen der Bewegungsrichtung umfassen, so dass das Werkzeug quasi "freigerüttelt" wird.

Auf diese Weise wird vorteilhaft die Bewegungsveränderung automatisiert durchgeführt und der Eingriff des Werkzeugs in die landwirtschaftliche Umgebung verbessert, ohne dass der Anwender manuell eingreifen muss. Im Stand der Technik war es oftmals notwendig die Blockade von Hand zu beseitigen, d.h. der Anwender musste erst das Gerät abschalten, dann absteigen und das Hindernis, z.B. einen Stein, manuell beseitigen. Stattdessen kann sich dank der vorliegenden Erfindung der Anwender auf die Fahrt, beispielsweise in einer Rebzeile auf einem Traktor, an welchem das erfindungsgemäße Gerät montiert ist, konzentrieren. Ein weiterer Verdienst dieser Erfindung ist, dass die Bewegungsveränderung erst bei einer Überschreitung des einstellbaren Grenzwerts für einen Zeitbereich bzw. einer Totzeit von mehr als 0 Sekunden erfolgt. Vorteilhaft werden dadurch Messungenauigkeiten des bereitgestellten mindestens einen messbaren Parameters gebührend Rechnung getragen und minimiert bzw. ausgeschlossen. Insbesondere sollen kurzfristige Schwankungen des Parameters, wie etwa kurze Druckspitzen im hydraulischen Antriebssystem, nicht zu einem Auslösen der Bewegungsänderung führen, sondern vorteilhaft nur solche Änderungen des Parameters, die empirisch mit hoher Wahrscheinlichkeit auf einer Beeinträchtigung der Bewegung des Werkzeugs beruhen. Die Bewegungsveränderung wird demnach bevorzugt nur dann durchgeführt, wenn das Werkzeug beispielsweise durch ein Hindernis, wie etwa ein großer Stein im Erdreich o.ä., an seiner vorgesehenen Bewegung gehindert wird.

Beim Einsatz eines Bodenbearbeitungswerkzeugs zur Unkrautentfernung kann es beispielsweise dazu kommen, dass das Werkzeug in Kontakt mit einem oder mehreren Stein(en) kommt, und die Bewegung des Werkzeugs behindert wird. Dieser erhöhte Bewegungswiderstand kann sensorisch erfasst und zur Einleitung von Gegenmaßen genutzt werden. Beispielsweise kann der mindestens eine messbare Parameter der Antriebsvorrichtung ein Druck der hydraulischen Antriebsvorrichtung sein, der typischerweise ansteigt, wenn das Werkzeug einen Widerstand erfährt. Wenn dieser Druck einen Grenzwert für einen gewissen Zeitbereich überschreitet, ist die Steuervorrichtung erfindungsgemäß dazu eingerichtet, eine Bewegungsveränderung des Werkzeugs durchzuführen. Diese kann beispielsweise die Umkehrung der Rotationsbewegung oder der Translationsbewegung umfassen, um auf diese Weise das Werkzeug zu lösen bzw. eine Bewegungsstörung zu beseitigen. Vorzugsweise wird die Dreh- bzw. Bewegungsrichtung nach einer Bewegungsveränderung automatisch wieder in die ursprüngliche Dreh bzw. Bewegungsrichtung umgekehrt. Damit kann unter Umständen das Werkzeug in vorteilhafter Weise eingesetzt werden.

Die erfindungsgemäße Steuervorrichtung, die dazu eingerichtet ist eine Bewegungsveränderung durchzuführen, verwendet dazu die Information des mindestens einen messbaren Parameters sowie einen einstellbaren Grenzwert. Der mindestens eine messbare Parameter hängt dabei von der Bewegung des Werkzeugs ab. Beispielsweise steigt der Druck einer hydraulischen Antriebsvorrichtung, wenn das Werkzeug auf einen Widerstand trifft. Analog kann die Stromaufnahme einer elektrischen Antriebsvorrichtung erfasst werden, um Bewegungsbehinderungen bzw. Widerstände des Werkzeugs zu erkennen. Aufgrund dieser Rückkopplung kann auch von einer Regelung gesprochen werden, da die von der Steuervorrichtung auszuführende Aktion von einer Bewegung des Werkzeugs selbst abhängt. Der hier verwendete Begriff der Steuervorrichtung soll somit synonym für Regel- und Steuervorrichtungen stehen.

Die Antriebsvorrichtung kann den messbaren Parameter auch über andere Mittel erfassen und bereitstellen, wie etwa über jede Art von Sensor, die dafür geeignet ist, die Bewegung des Werkzeugs oder den Widerstand, den das Werkzeug erfährt, zu überwachen, wie etwa Drehmomentsensoren, Drehzahlsensoren, Kraftsensoren, Dehnungsmessstreifen, Biegesensoren, o.ä.

In einer bevorzugten Ausführungsform beträgt die Dauer des Zeitbereichs, die das Auslösen der Bewegungsveränderung mitbestimmt, mindestens 0,05 Sekunden, bevorzugt mindestens 0,1 Sekunden weiter bevorzugt mindestens 0,2 Sekunden am meisten bevorzugt mindestens, 0,3 Sekunden. Die Dauer dieses Zeitbereichs ist somit deutlich größer als die übliche Abtastrate einer Regelung bzw. Steuervorrichtung. Insbesondere ist dieser Zeitbereich von der Periodendauer der Abtastfrequenz der vorliegenden Steuervorrichtung zu unterscheiden und so gewählt, dass in der Praxis eine Auslösung mit hoher Wahrscheinlichkeit nur dann erfolgt, wenn tatsächlich eine substantielle Beeinträchtigung der Bewegung des Werkzeugs vorliegt.

Weiter bevorzugt wird die ausgelöste Bewegungsveränderung für die Dauer von mindestens 0,001 Sekunden, bevorzugt mindestens 0,1 Sekunden, weiter bevorzugt mindestens 0,2 Sekunden, am meisten bevorzugt mindestens 0,3 Sekunden durchgeführt. Zu lange sollte die Bewegungsveränderung jedoch nicht durchgeführt werden, da die Bewegungsveränderung typischerweise die Effizienz des Werkzeugs beeinträchtigt. Beispielsweise haben rotierende Werkzeuge oft eine vom Einsatzzweck vorgegebene bevorzugte Drehrichtung. Wird diese bei Bewegungsänderung umgekehrt, um beispielsweise eine Blockade des Werkzeugs zu lösen, dreht das Werkzeug für eine Zeitlang in die falsche oder weniger effiziente Richtung. Daher ist es vorteilhaft, wenn die ausgelöste Bewegungsveränderung eine Dauer von maximal 20 Sekunden, bevorzugt maximal 15 Sekunden, weiter bevorzugt maximal 10 Sekunden, am meisten bevorzugt maximal 5 Sekunden umfasst.

Der Begriff der Bewegungsveränderung ist dabei nicht so zu verstehen, dass die Bewegungsumkehr (oder Geschwindigkeitsänderung o.ä.) nur einmalig stattfinden darf. Vielmehr kann die Bewegungsveränderung auch ein mehrmaliges Auslösen einer Bewegungsumkehr umfassen. Beispielsweise könnte dies notwendig sein, wenn nach einer ersten Bewegungsumkehrung und einem gegebenenfalls anschließenden Fortlaufen der Bewegung in der umgekehrten Bewegungsrichtung weiterhin oder erneut ein Bewegungswiderstand vorliegt, der in der umgekehrten Bewegungsrichtung nicht überwunden werden kann.

Durch die Eingrenzung der Dauer der Bewegungsveränderung wird zudem vorteilhaft sichergestellt, dass beispielsweise bei einer geringen oder einmaligen Störung die Bewegungsveränderung sehr schnell durchgeführt werden kann. Beispielsweise reicht oft eine einmalige Bewegungsumkehr aus, mit einer minimalen Bewegung in die umgekehrte Richtung, um eine Behinderung des Werkzeugs zu beseitigen.

Vorzugsweise umfasst das erfindungsgemäße Gerät als Werkzeug einen Zinkenkreisel (Unterstockkreisel), einen Entlauber, einen Messerbalken oder ein sonstiges für den Einsatz im Wein- und Obstbau geeignetes Werkzeug. Für den Fachmann ist ersichtlich, dass sich die vorliegende Erfindung auf jegliche bewegbare Teile oder Werkzeuge erstrecken kann, die im Eingriff mit der Umwelt sind und dort auf einen Widerstand stoßen können. Das erfindungsgemäße Gerät umfasst eine Steuervorrichtung, die dazu eingerichtet ist diese Bewegungswiderstände in vorteilhafter Weise zu verringern, zu überwinden, bzw. zu umgehen, um einen effizienten Arbeitsprozess des Anwenders zu ermöglichen.

Die Bewegungsveränderung umfasst bei sich rotatorisch bewegenden Werkzeugen vorzugsweise eine Umkehrung in die entgegengesetzte Drehrichtung. Bei sich translatorisch bewegenden Werkzeugen umfasst die Bewegungsveränderung eine Umkehrung in die entgegengesetzte translatorische Richtung. Auf diese Weise ist in vorteilhafter Art sichergestellt, dass das Werkzeug nicht weiter gegen den vorliegenden Widerstand angetrieben wird bzw. versucht wird diesen Widerstand in der gleichen Richtung zu überwinden. Gleichzeitig oder alternativ kann die Bewegungsveränderung auch eine Positionsänderung des Werkzeugs umfassen, wie etwa ein Zurückschwenken oder Aushebeln des Werkzeugs.

Vorzugsweise erlaubt die erfindungsgemäße Steuervorrichtung eine Vielzahl an Möglichkeiten, um eine Beeinträchtigung des Werkzeugs zu überwinden:
Bei sich rotatorisch bewegenden Werkzeugen ist eine Bewegungsveränderung eine einmalige Bewegungsumkehrung sowie die Weiterbewegung nach dem Auslösen der Bewegungsumkehr um einen Winkel um die Drehachse im Bereich von 0,5° - 120°, bevorzugt 2° - 90°, weiter bevorzugt 4° - 60°, am meisten bevorzugt 6°-30° umfassen. Beispielsweise eröffnet die Erfindung damit die Möglichkeit bei einem Zinkenkreisel mit drei zur Verwendung kommenden Zinken die in einem radialen Abstand von 120° kreisförmig angeordnet sind und sich im Eingriff mit dem Boden befinden, dass bei einer Bewegung in die Bewegungsumkehrrichtung nicht ein anderer Zinken mit dem Widerstand im Kontakt kommt. Dies könnte bei einem größeren Drehwinkel als 120° der Fall sein. Somit wird dieser Fall in vorteilhafter Weise ausgeschlossen. Bei einem Zinkenkreisel mit vier zur Verwendung kommenden Zinken, die in einem Abstand von 90° angeordnet sind und sich im Eingriff mit dem Boden befinden, sollte die Bewegung in der umgekehrten Drehrichtung daher weniger als 90° betragen.

Bei sich translatorisch bewegenden Werkzeugen ist eine Bewegungsveränderung eine einmalige Bewegungsumkehr und dann die Weiterbewegung nach dem Auslösen der Bewegungsumkehr in einem Bereich von 0,5% - 90%, bevorzugt 5% - 80%, weiter bevorzugt 10% - 60%, am meisten bevorzugt 20%-40% bezogen auf die gesamte Weglänge des translatorisch bewegten Werkzeugs umfassen. Auch hier wird vorteilhaft sichergestellt, dass der Widerstand schnell überwunden werden kann und der Arbeitsprozess somit vereinfacht wird.

In einer bevorzugten Ausführungsform betrifft eine Ausführung einer Bewegungsveränderung ein Szenario, in welchem die Bewegungsumkehrung des Werkzeugs so oft durchgeführt wird bis ein Widerstand überwunden ist. Dies betrifft das Auslösen einer Bewegungsumkehrung sowie das Fortführen der Bewegung in der veränderten Bewegungsrichtung. Das Auslösen der Bewegungsumkehr geschieht dabei, wenn der mindestens eine messbare Parameter, zum Beispiel der Druck eines hydraulischen Antriebs des Werkzeugs, oberhalb eines einstellbaren Grenzwertes für einen Zeitbereich von mindestens 0 Sekunden verbleibt. Wenn sich das Werkzeug dann in der umgekehrten Richtung bewegt und der Parameter für die Dauer eines einstellbaren Zeitbereichs unterhalb des einstellbaren Grenzwertes verbleibt, ist der Widerstand überwunden. Andernfalls findet eine erneute Bewegungsumkehr statt. Dieser Vorgang wiederholt sich so lange bis der mindestens eine messbare Parameter unterhalb des einstellbaren Grenzwertes verbleibt. Liegt am Ende dieses Szenarios die Bewegungsrichtung entgegen der ursprünglichen Bewegungsrichtung vor, kann optional die Bewegungsrichtung wieder in die ursprüngliche Richtung gebracht werden.

In einer weiteren bevorzugten Ausführungsform werden mehrere Wiederholungen eines bestimmten Bewegungs-Zyklus durchgeführt. Der Zyklus umfasst dabei beispielsweise das Auslösen einer Bewegungsumkehrung sowie das Fortführen der Bewegung in der veränderten Bewegungsrichtung. Die Wiederholung der Zyklen geschieht bei dieser Ausführung in zeitlichen Abständen von höchstens 0,5 Sekunden, bevorzugt höchstens 0,3 Sekunden, weiter bevorzugt höchstens 0,2 Sekunden, am meisten bevorzugt höchstens 0,1 Sekunden. Der erste Zyklus wird dabei durch den messbaren Parameter ausgelöst. Die folgenden Zyklen können hingegen unabhängig vom Wert des Parameters durchgeführt werden. Mit dieser weiteren Ausführung der Bewegungsveränderung kann somit ein Freirütteln des Werkzeugs bereitgestellt werden, worin nach dem erstmaligen Auslösen einer Bewegungsumkehr eine vorgegebene Anzahl an Bewegungs-Umkehrungen stattfindet, und zwar unabhängig von dem Wert des messbaren Parameters.

In einer weiteren Ausführungsform der Bewegungsveränderung wird ein Auslösen einer Bewegungsumkehrung sowie das Fortführen der Bewegung in der veränderten Bewegungsrichtung sowie die Wiederholung dieses Zyklus bereitgestellt. Der Zyklus umfasst also das Auslösen einer Bewegungsumkehrung sowie das Fortführen der Bewegung in der veränderten Bewegungsrichtung. Die Wiederholung der Zyklen geschieht bei dieser Ausführung in zeitlich aufsteigenden Abständen, von beispielsweise 0,1 Sekunden, 0,3 Sekunden, 0,5 Sekunden, usw. Bei diesen Beispielwerten dauert der erste Zyklus also 0,1 Sekunden, der zweite Zyklus 0,3 Sekunden und der dritte Zyklus 0,5 Sekunden. Durch die Asynchronität der hierbei verwendeten Zeitabstände kann in vorteilhafter Weise ein Widerstand gegebenenfalls schneller überwunden werden, da beispielsweise im Falle eines Zinkenkreisel die Zinken in zeitlich veränderlichen Abständen und nicht gleichen Abständen ein und dieselbe Stelle wieder befahren.

Der Wert des mindestens einen messbaren Parameters hängt vorzugsweise von dem Bewegungswiderstand des Werkzeugs ab. Dies bietet den Vorteil einer Korrelation zwischen dem gegebenenfalls vorliegenden störenden Hindernis und einem erfassbaren Parameter. Im Falle einer hydraulischen Antriebsvorrichtung steigt bspw. der hydraulische Druck, wenn das Werkzeug einen Widerstand erfährt; bei elektrischen Antrieben steigt die Leistungsaufnahme des Motors. Auch die Temperatur der Antriebe steigt üblicherweise an, wenn das Werkzeug auf einen Widerstand stößt und die Leistung des Antriebs entsprechend steigt, um eine Soll-Geschwindigkeit oder Soll-Drehzahl oder einen Soll-Bewegungszustand zu erreichen. Wenn der Bewegungswiderstand geringer wird, sinkt hingegen der benötigte hydraulische Druck bzw. die Leistungsaufnahme des Antriebs.

Im Falle einer hydraulischen Antriebsvorrichtung ist in einer bevorzugten Ausführungsform der mindestens eine messbare Parameter ein Hydraulikdruck der hydraulischen Antriebsvorrichtung. Vorzugsweise ist der Hydraulikdruck proportional vom Bewegungswiderstand des Werkzeugs abhängig. Der einstellbare Grenzwert für den Parameter beträgt dabei vorzugsweise mindestens 20 bar, bevorzugt mindestens 40 bar, weiter bevorzugt mindestens 100 bar, am meisten bevorzugt mindestens 200 bar.

Ein besonderer Vorteil der Berücksichtigung einer Totzeit vor dem Durchführen einer Bewegungsumkehrung liegt darin, dass wenn der mindestens eine messbare Parameter in unmittelbarer Nähe des einstellbaren Grenzwertes liegt sowie der mindestens eine messbare Parameter Schwankungen unterliegt, wodurch zum Beispiel aufeinanderfolgende Über- und Unterschreitungen des Grenzwertes stattfinden, kein dauerhaftes und wiederholtes Durchführen einer Bewegungsumkehrung stattfindet, wodurch das Gerät Schaden nehmen könnte.

### 4. Kurze Beschreibung der Abbildungen

Im Folgenden wird die vorliegende Erfindung unter Bezugnahme auf die beigefügten Figuren genauer erläutert. Hierbei zeigt:
Fig. 1a eine Darstellung eines erfindungsgemäßen Geräts mit einem Zinkenkreisel und einer Flachschar als Werkzeuge in einer Seitenansicht;
Fig. 1b eine Darstellung des Geräts der Figur 1a in einer Perspektivansicht;
Fig. 2a eine Darstellung eines weiteren erfindungsgemäßen Geräts mit einem Entlauber als Werkzeug in einer Seitenansicht;
Fig. 2b das Gerät der Fig. 2a in einer Perspektivansicht;
Fig. 3 eine schematische Darstellung eines Trägerfahrzeug mit einem daran angeordneten Gerät;
Fig. 4 eine Darstellung eines zeitlichen Ablaufs eines Steuerungsprinzips einer bevorzugten Ausführungsform;
Fig. 5 eine Darstellung eines zeitlichen Ablaufs eines Steuerungsprinzips einer weiteren bevorzugten Ausführungsform.

### 5. Ausführliche Beschreibung von bevorzugten Ausführungsformen

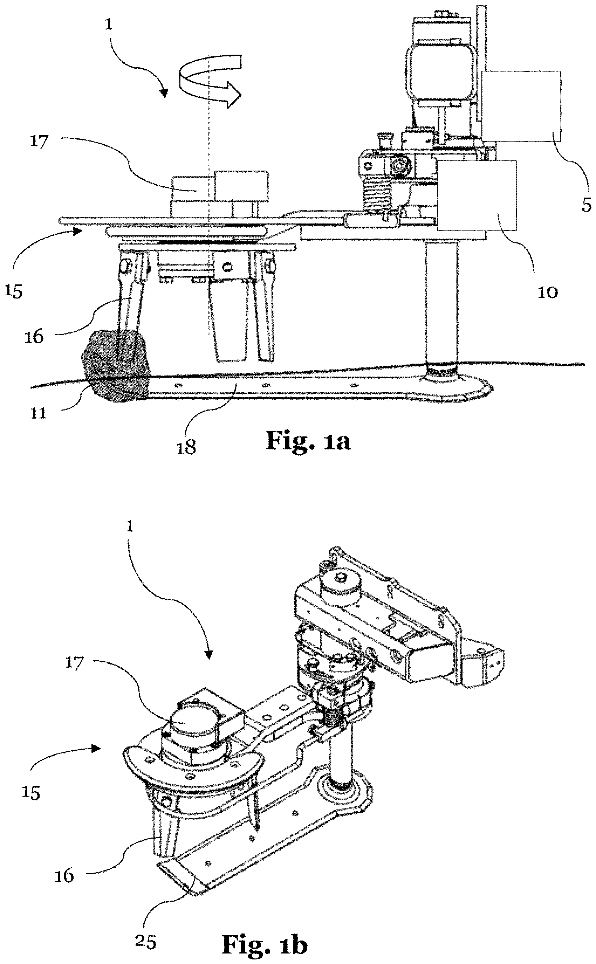

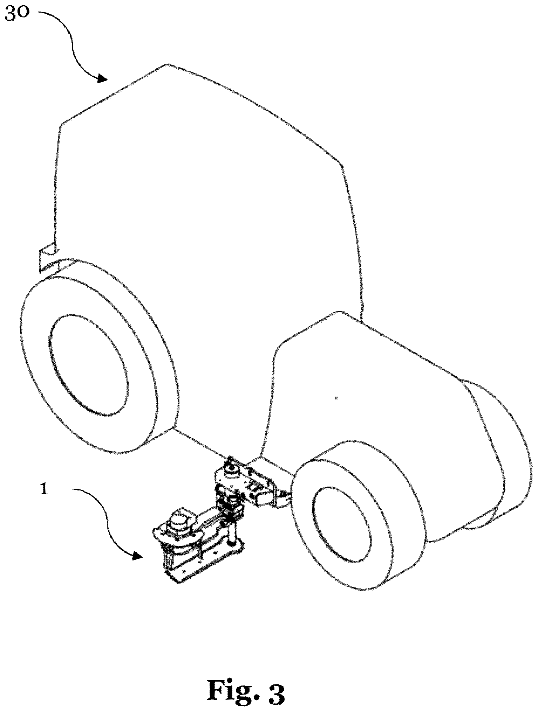

In den Figuren 1a und 1b ist ein landwirtschaftliches Gerät 1 dargestellt, welches an einem Trägerfahrzeug 30 (siehe Figur 3) befestigt werden kann. Das Gerät 1 umfasst eine Antriebsvorrichtung 5, um Werkzeuge 15, 18 anzutreiben. Als Werkzeuge sind hier ein Zinkenkreisel 15 mit drei Zinken 16, die in einem Abstand von 120° an einer drehbaren Platte montiert sind, und eine Flachschar 18 dargestellt. Der gezeigte Zinkenkreisel ist nur ein Beispiel und die Anzahl der Zinken kann auch nur zwei sein oder auch mehr als die gezeigten drei. Die Werkzeuge werden durch das Erdreich geführt und dienen dazu, Unkraut zu bekämpfen. Der Zinkenkreisel 15 wird hierzu in Rotation versetzt, so dass die drei Zinken 16 um eine zum Boden im Wesentlichen senkrechte Drehachse rotieren. Mit Bezugszeichen 11 ist schematisch und beispielhaft ein Stein bezeichnet, der den Betrieb der Werkzeuge behindern kann, wenn er beispielsweise zwischen die Zinken 16 gerät. Die vorliegende Erfindung erlaubt es, derartige Probleme automatisch zu erkennen und automatisch durch eine Bewegungsänderung der Werkzeuge zu beheben. Beispielsweise umfasst die Antriebsvorrichtung 5 einen hydraulischen Antrieb 17, der die Zinken 16 antreibt bzw. in Rotation versetzt. Wenn die Zinken 16 auf ein größeres Hindernis, wie den Stein 11 treffen, erfahren sie einen erhöhten Widerstand im Erdreich, was zu einer Erhöhung des Hydraulikdrucks führt. Der Hydraulikdruck wird von einer Steuervorrichtung 10 überwacht und bei Überschreiten eines vorgegebenen Grenzwerts über eine bestimmte vorgegebene Zeitspanne, veranlasst die Steuervorrichtung 10 das Werkzeug 15 eine Bewegungsänderung durchzuführen. Dies kann wie Eingangs beschrieben bspw. einen Befehl an den hydraulischen Antrieb 17 umfassen, die Drehrichtung der Zinken für eine bestimmte Zeit umzukehren, so dass der Stein 11 von den Zinken gelöst wird.

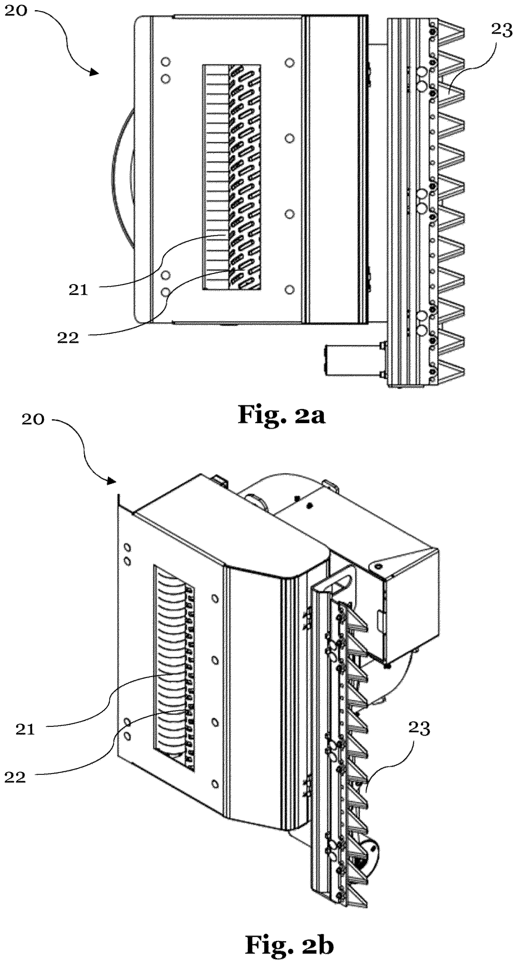

Figur 2a und 2b zeigen beispielhaft einen Entlauber 20 als landwirtschaftliches Gerät. Der Entlauber 20 umfasst zwei gegenläufige Walzen 21, 22 zur Entfernung von überschüssigem Laub. Außerdem weist das Gerät einen Messerbalken bzw. ein Doppelmesser 23 als Werkzeug auf, das an dem Entlaubergehäuse montiert ist und welches sich translatorisch hin- und her bewegen kann. Während des Betriebs kann es vorkommen, dass die Walzen oder der Messerbalken durch besonders starke Äste blockiert oder behindert werden.

Figur 3 zeigt ein Trägerfahrzeug 30 für den Einsatz in der Landwirtschaft woran ein erfindungsgemäßes Gerät 1, in diesem Fall das Gerät der Figuren 1A/1B, montiert ist. Das Trägerfahrzeug 30 kann beispielsweise zwischen Reihen von Rebstöcken fahren, um Unkraut zu entfernen. Der in Fahrtrichtung rechts am Trägerfahrzeug 30 montierte Zinkenkreisel dreht von oben gesehen im Uhrzeigersinn, so dass Erde und Pflanzenreste zur Zeilenmitte transportiert werden.

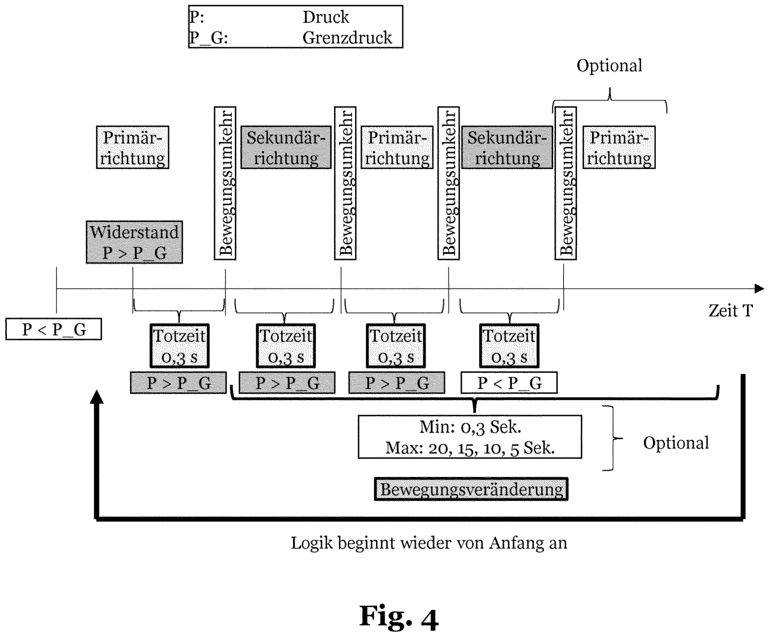

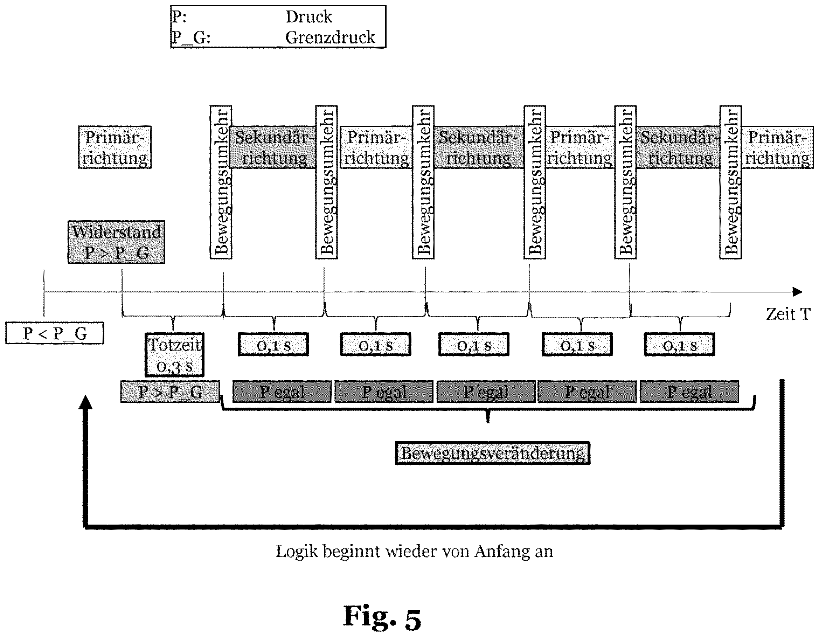

Im Folgenden sollen anhand der Ablaufdiagramme der Figuren 4 und 5 Steuerungsprinzipien bevorzugter Ausführungsformen veranschaulicht werden. Dies wird anhand des Beispiels einer hydraulischen Antriebsvorrichtung gezeigt, wobei der mindestens eine messbare Parameter ein Hydraulikdruck der hydraulischen Antriebsvorrichtung sein soll und der einstellbare Grenzwert ein Grenzdruck (P_G). Im normalen Arbeitsbetrieb bewegt sich der Zinkenkreisel in einer Primärrichtung und der Hydraulikdruck ist kleiner als der Grenzdruck. Wenn das Werkzeug 15 auf einen Widerstand, zum Beispiel einen Stein 11 trifft, kann der Hydraulikdruck gemäß Figur 4 über den Grenzdruck steigen. Sobald dies der Fall ist beginnt ein Zeitbereich bzw. die Totzeit zu zählen, im Ausführungsbeispiel gemäß Figur 4 beträgt diese 0,3 Sekunden. Wenn innerhalb dieser 0,3 Sekunden der Hydraulikdruck oberhalb des Grenzdrucks verbleibt, wird eine Bewegungsumkehr ausgelöst, sodass hier der Zinkenkreisel in die entgegengesetzte Richtung bzw. in die Sekundärrichtung dreht. Im Beispielsfall befindet sich der Hydraulikdruck in der Umkehrrichtung allerdings immer noch oberhalb des Grenzdrucks so das nach 0,3 Sekunden erneut eine Bewegungsumkehr von der Sekundär- in die Primärrichtung stattfindet. Der Druck wird weiter gemessen und im dargestellten Beispiel soll dieser weiterhin für 0,3 Sekunden oberhalb des Grenzdrucks bleiben. Dies löst eine erneute Bewegungsumkehr aus, welche die Blockade löst. Der Druck fällt nunmehr ab und unter den Grenzdruck.

Da zu diesem Zeitpunkt der Zinkenkreisel in die unerwünschte Sekundärrichtung dreht, wird vorzugsweise eine erneute Bewegungsumkehr in die Primärrichtung durchgeführt.

Figur 5 zeigt in einer weiteren Ausführungsform ein Steuerungsprinzip des Freirüttelns. Wenn gemäß Figur 5 das Werkzeug 15 auf einen Widerstand trifft steigt der Hydraulikdruck über den Grenzdruck an. Wenn der Hydraulikdruck für mehr als 0,3 Sekunden oberhalb des Grenzdruck liegt, findet eine Bewegungsumkehr statt, sodass der Zinkenkreisel in die entgegengesetzte Richtung bzw. Sekundärrichtung dreht. Nach der erstmaligen Bewegungsumkehr finden, in festen zeitlichen Abständen von 0,1 Sekunden - unabhängig vom Wert des Hydraulikdrucks - vier weitere Bewegungsumkehrungen statt. In diesem Ausführungsbeispiel liegt nach der vierten weiteren Bewegungsumkehr der Hydraulikdruck unterhalb des Grenzdrucks für eine Totzeit von 0,3 Sekunden. Damit ist der Widerstand überwunden und der Zinkenkreisel erfolgreich gelöst worden. Optional kann nun noch eine Bewegungsumkehr in die Primärrichtung stattfinden. Falls nach der vierten weiteren Bewegungsumkehr der Hydraulikdruck weiterhin oberhalb des Grenzdrucks liegt, beginnt das Steuerungsprinzip des Freirüttelns erneut mit einer ersten Bewegungsumkehr und danach vier weiteren Bewegungsumkehrungen. Selbstverständlich ist die Anzahl der Bewegungsumkehrungen sowie die im Beispiel genannten Zeitdauern nur beispielhaft und es können auch mehr oder weniger Zyklen mit anderen Zeitdauern durchgeführt werden.

## Patentansprüche

1. Gerät (1) für den Einsatz in der Landwirtschaft, insbesondere für Reihenkulturen, umfassend:
eine hydraulische Antriebsvorrichtung (5); und
eine Steuervorrichtung (10); wobei
die hydraulische Antriebsvorrichtung (5) mindestens einen messbaren Parameter bereitstellt und dazu eingerichtet ist, ein Werkzeug (15) zu bewegen; wobei
die Steuervorrichtung (10) dazu eingerichtet ist, eine Bewegungsveränderung des Werkzeugs (15) durchzuführen, wobei
die Bewegungsveränderung ausgelöst wird, wenn der mindestens eine messbare Parameter der hydraulischen Antriebsvorrichtung (5) einen einstellbaren Grenzwert für einen Zeitbereich von mehr als 0 Sekunden überschreitet oder unterschreitet, **dadurch gekennzeichnet, dass**
die Bewegungsveränderung des Werkzeugs (15) eine Bewegungsumkehrung umfasst und
1. die Weiterbewegung nach dem Auslösen der Bewegungsumkehrung bei rotatorischen Bewegungen um einen Winkel um die Drehachse im Bereich von 0,5° - 120°, bevorzugt 2° - 90°, weiter bevorzugt 4° - 60°, am meisten bevorzugt 6°-30° erfolgt; bzw.
2. die Weiterbewegung nach dem Auslösen der Bewegungsumkehrung des Werkzeugs (15) bei translatorischen Bewegungen eine Weglänge im Bereich von 0,5% - 90%, bevorzugt 5% - 80%, weiter bevorzugt 10% - 60%, am meisten bevorzugt 20%-40% bezogen auf die gesamte Weglänge des translatorisch bewegten Werkzeugs (15) umfasst.

2. Ein Gerät (1) für den Einsatz in der Landwirtschaft, insbesondere für Reihenkulturen, umfassend:
eine elektrische Antriebsvorrichtung (5); und
eine Steuervorrichtung; wobei
die elektrische Antriebsvorrichtung (5) mindestens einen messbaren Parameter bereitstellt und dazu eingerichtet ist, ein Werkzeug (15) zu bewegen; wobei
die Steuervorrichtung dazu eingerichtet ist, eine Bewegungsveränderung des Werkzeugs (15) durchzuführen, wobei
die Bewegungsveränderung ausgelöst wird, wenn der mindestens eine messbare Parameter der elektrischen Antriebsvorrichtung (5) einen einstellbaren Grenzwert für einen Zeitbereich von mehr als 0 Sekunden überschreitet oder unterschreitet, dadurch gekennzeichent, dass die Bewegungsveränderung des Werkzeugs (15) eine Bewegungsumkehrung umfasst und
1. die Weiterbewegung nach dem Auslösen der Bewegungsumkehrung bei rotatorischen Bewegungen um einen Winkel um die Drehachse im Bereich von 0,5° - 120°, bevorzugt 2° - 90°, weiter bevorzugt 4° - 60°, am meisten bevorzugt 6° - 30° erfolgt; bzw.
2. die Weiterbewegung nach dem Auslösen der Bewegungsumkehrung des Werkzeugs (15) bei translatorischen Bewegungen eine Weglänge im Bereich von 0,5% - 90%, bevorzugt 5% - 80%, weiter bevorzugt 10% - 60%, am meisten bevorzugt 20% - 40% bezogen auf die gesamte Weglänge des translatorisch bewegten Werkzeugs (15) umfasst.

3. Gerät (1) nach einem der vorherigen Ansprüche, wobei die Dauer des Zeitbereichs mindestens 0,05 Sekunden, bevorzugt mindestens 0,1 Sekunden, weiter bevorzugt mindestens 0,2 Sekunden und am meisten bevorzugt mindestens 0,3 Sekunden ist.

4. Gerät (1) nach einem der vorhergehenden Ansprüche, wobei die ausgelöste Bewegungsveränderung für die Dauer von mindestens 0,001 Sekunden, bevorzugt mindestens 0,1 Sekunden, weiter bevorzugt mindestens 0,2 Sekunden, am meisten bevorzugt mindestens 0,3 Sekunden durchgeführt wird; und/oder
wobei die ausgelöste Bewegungsveränderung für die Dauer von maximal 20 Sekunden, bevorzugt maximal 15 Sekunden, weiter bevorzugt maximal 10 Sekunden, am meisten bevorzugt maximal 5 Sekunden durchgeführt wird.

5. Gerät (1) nach einem der vorherigen Ansprüche, wobei das Werkzeug (15) einen Zinkenkreisel, einen Entlauber, einen Messerbalken, eine Rotorbürste oder ein sonstiges für den Einsatz im Wein- und Obstbau geeignetes Werkzeug (15) umfasst.

6. Gerät (1) nach einem der vorherigen Ansprüche, wobei die Bewegungsveränderung des Werkzeugs (15) dazu eingerichtet ist, einen Bewegungswiderstand des Werkzeugs (15) zu verringern.

7. Gerät (1) nach einem der vorhergehenden Ansprüche, wobei die Steuervorrichtung dazu eingerichtet ist, die Bewegungsveränderung auf folgende Weise durchzuführen:
a) Auslösen einer Bewegungsumkehrung und danach Auslösen von genau einer weiteren Bewegungsumkehr; oder
b) Auslösen einer Bewegungsumkehrung und danach Auslösen von zumindest zwei weiteren Bewegungsumkehrungen in zeitlichen Abständen von höchstens 0,5 Sekunden, bevorzugt höchstens 0,3 Sekunden, weiter bevorzugt höchstens 0,2 Sekunden, am meisten bevorzugt höchstens 0,1 Sekunden; und/oder
c) Auslösen einer Bewegungsumkehrung und danach Auslösen von zumindest zwei weiteren Bewegungsumkehrungen in zeitlich an- oder absteigenden Abständen; und/oder
d) Auslösen einer Bewegungsumkehrung und danach Auslösen von weiteren Bewegungsumkehrungen in zeitlichen Abständen von höchstens 0,5 Sekunden, bevorzugt höchstens 0,3 Sekunden, weiter bevorzugt höchstens 0,2 Sekunden, am meisten bevorzugt höchstens 0,1 Sekunden, bis der mindestens eine messbare Parameter den Grenzwert unterschreitet.

8. Gerät (1) nach einem der vorhergehenden Ansprüche, wobei der Wert des mindestens einen messbaren Parameters von dem Bewegungswiderstand des Werkzeugs (15) abhängig ist.

9. Gerät (1) nach einem der vorhergehenden Ansprüche, wobei der Parameter so gewählt ist, dass sein Wert mit steigendem Bewegungswiderstand des Werkzeugs (15) ansteigt und mit sinkendem Bewegungswiderstand des Werkzeugs (15) sinkt.

10. Gerät (1) nach einem der vorhergehenden Ansprüche, wobei der Wert des mindestens einen messbaren Parameters proportional zu dem Bewegungswiderstand des Werkzeugs (15) ist.

11. Gerät (1) nach einem der vorherigen Ansprüche 3-10 in Kombination mit Anspruch 1, wobei der mindestens eine messbare Parameter ein Hydraulikdruck der hydraulischen Antriebsvorrichtung (5) ist; und wobei vorzugsweise der einstellbare Grenzwert mindestens 20 bar, bevorzugt mindestens 40 bar, weiter bevorzugt mindestens 100 bar, am meisten bevorzugt mindestens 200 bar beträgt.

12. Gerät (1) nach einem der vorherigen Ansprüche 3-10 in Kombination mit Anspruch 2, wobei der mindestens eine messbare Parameter ein elektrischer Parameter der elektrischen Antriebsvorrichtung (5) ist.

13. Gerät (1) nach einem der vorherigen Ansprüche, **dadurch gekennzeichnet, dass** der Zeitbereich nicht der Abtastfrequenz der Steuervorrichtung entspricht.

14. Ein Trägerfahrzeug (20), insbesondere für den Betrieb in der Landwirtschaft, umfassend ein Gerät (1) nach einem der vorherigen Ansprüche.

## Claims

1. An apparatus (1) for use in agriculture, in particular for row crops, comprising:
a hydraulic drive device (5); and
a control device (10); wherein
the hydraulic drive device (5) provides at least one measurable parameter and is configured to move a tool (15); wherein
the control device (10) is configured to carry out a change in movement of the tool (15), wherein
the change in movement is triggered when the at least one measurable parameter of the hydraulic drive device (5) exceeds or falls below an adjustable limit value for a time range of more than 0 seconds, **characterized in that**
the change in movement of the tool (15) comprises a movement reversal and
1. the further movement after the triggering of the movement reversal takes place in the case of rotational movements about an angle about the axis of rotation in the range of 0.5° - 120°, preferably 2° - 90°, further preferably 40 - 60°, most preferably 6° - 30°; respectively
2. the further movement after the triggering of the movement reversal of the tool (15) in the case of translational movements comprises a path length in the range of 0.5% - 90%, preferably 5% - 80%, further preferably 10% - 60%, most preferably 20% - 40% in relation to the total path length of the translationally moved tool (15).

2. An apparatus (1) for use in agriculture, in particular for row crops, comprising:
an electric drive device (5); and
a control device; wherein
the electric drive device (5) provides at least one measurable parameter and is configured to move a tool (15); wherein
the control device is configured to carry out a change in movement of the tool (15), wherein
the change in movement is triggered when the at least one measurable parameter of the electric drive device (5) exceeds or falls below an adjustable limit value for a time range of more than o seconds, **characterized in that** the change in movement of the tool (15) comprises a movement reversal and
1. the further movement after the triggering of the movement reversal takes place in the case of rotational movements about an angle about the axis of rotation in the range of 0.5° - 120°, preferably 2° - 90°, further preferably 4° - 60°, most preferably 6° - 30°; respectively
2. the further movement after the triggering of the movement reversal of the tool (15) in the case of translational movements comprises a path length in the range of 0.5% - 90%, preferably 5% - 80%, further preferably 10% - 60%, most preferably 20% - 40% in relation to the total path length of the translationally moved tool (15).

3. The device (1) according to one of the preceding claims, wherein the duration of the time range is at least 0.05 seconds, preferably at least 0.1 seconds, further preferably at least 0.2 seconds and most preferably at least 0.3 seconds.

4. The device (1) according to one of the preceding claims, wherein the triggered change in movement is carried out for the duration of at least 0.001 seconds, preferably at least 0.1 seconds, further preferably at least 0.2 seconds, most preferably at least 0.3 seconds; and/or
wherein the triggered change in movement is carried out for the duration of at most 20 seconds, preferably at most 15 seconds, further preferably at most 10 seconds, most preferably at most 5 seconds.

5. The device (1) according to one of the preceding claims, wherein the tool (15) comprises a tine gyro, a defoliator, a knife bar, a rotor brush or another tool (15) suitable for use in wine and fruit growing.

6. The device (1) according to one of the preceding claims, wherein the change in movement of the tool (15) is configured to reduce a movement resistance of the tool (15).

7. The device (1) according to one of the preceding claims, wherein the control device is configured to carry out the change in movement in the following manner:
a) triggering a movement reversal and then triggering exactly one further movement reversal; or
b) triggering a movement reversal and then triggering at least two further movement reversals at time intervals of at most 0.5 seconds, preferably at most 0.3 seconds, further preferably at most 0.2 seconds, most preferably at most 0.1 seconds; and/or
c) triggering a movement reversal and then triggering at least two further movement reversals at ascending or descending time intervals; and/or
d) triggering a movement reversal and then triggering further movement reversals at time intervals of at most 0.5 seconds, preferably at most 0.3 seconds, further preferably at most 0.2 seconds, most preferably at most 0.1 seconds, until the at least one measurable parameter falls below the limit value.

8. The device (1) according to one of the preceding claims, wherein the value of the at least one measurable parameter is dependent on the movement resistance of the tool (15).

9. The device (1) according to one of the preceding claims, wherein the parameter is selected such that its value increases with increasing movement resistance of the tool (15) and decreases with decreasing movement resistance of the tool (15).

10. The device (1) according to one of the preceding claims, wherein the value of the at least one measurable parameter is proportional to the movement resistance of the tool (15).

11. The device (1) according to one of the preceding claims 3-10 in combination with claim 1, wherein the at least one measurable parameter is a hydraulic pressure of the hydraulic drive device (5); and wherein preferably the adjustable limit value is at least 20 bar, preferably at least 40 bar, further preferably at least 100 bar, most preferably at least 200 bar.

12. The device (1) according to one of the preceding claims 3-10 in combination with claim 2, wherein the at least one measurable parameter is an electric parameter of the electric drive device (5).

13. The device (1) according to one of the preceding claims, **characterized in that** the time range does not correspond to the sampling frequency of the control device.

14. A carrier vehicle (20), in particular for operation in agriculture, comprising an apparatus (1) according to one of the preceding claims.

## Revendications

1. Appareil (1) destiné à être utilisé en agriculture, en particulier pour des cultures en rangs, comprenant :
un dispositif d'entraînement (5) hydraulique ; et
un dispositif de commande (10) ; dans lequel
le dispositif d'entraînement (5) hydraulique fournit au moins un paramètre mesurable et est conçu afin de déplacer un outil (15) ; dans lequel
le dispositif de commande (10) est conçu afin de réaliser une modification de déplacement de l'outil (15), dans lequel
la modification de déplacement est déclenchée lorsque l'au moins un paramètre mesurable du dispositif d'entraînement (5) hydraulique dépasse ou n'atteint pas une valeur limite réglable pour une plage temporelle de plus de o seconde, **caractérisé en ce que**
la modification de déplacement de l'outil (15) comprend une inversion de déplacement et
1°) la poursuite du déplacement est effectuée après le déclenchement de l'inversion de déplacement en cas de déplacements rotatifs d'un angle autour de l'axe de rotation dans la plage de 0,5° à 120°, de préférence de 2° à 90°, de manière davantage préférée de 4° à 60°, de manière préférée entre toutes de 6° à 30° ; ou
2°) la poursuite du déplacement comprend, après le déclenchement de l'inversion de déplacement de l'outil (15) en cas de déplacements en translation, une longueur de course dans la plage de 0,5 % à 90 %, de préférence de 5% à 80 %, de manière davantage préférée de 10 % à 60 %, de manière préférée entre toutes de 20 % à 40 % par rapport à la longueur de course entière de l'outil (15) déplacé en translation.

2. Appareil (1) destiné à être utilisé en agriculture, en particulier pour des cultures en rangs, comprenant :
un dispositif d'entraînement (5) hydraulique ; et
un dispositif de commande ; dans lequel
le dispositif d'entraînement (5) électrique fournit au moins un paramètre mesurable et est conçu afin de déplacer un outil (15) ; dans lequel
le dispositif de commande est conçu afin de réaliser une modification de déplacement de l'outil (15), dans lequel
la modification de déplacement est déclenchée lorsque l'au moins un paramètre mesurable du dispositif d'entraînement (5) électrique dépasse ou n'atteint pas une valeur limite réglable pour une plage temporelle de plus de o seconde, **caractérisé en ce que**
la modification de déplacement de l'outil (15) comprend une inversion de déplacement et
1°) la poursuite du déplacement est effectuée après le déclenchement de l'inversion de déplacement en cas de déplacements rotatifs d'un angle autour de l'axe de rotation dans la plage de 0,5° à 120°, de préférence de 2° à 90°, de manière davantage préférée de 4° à 60°, de manière préférée entre toutes de 6° à 30° ; ou
2°) la poursuite du déplacement comprend, après le déclenchement de l'inversion de déplacement de l'outil (15) en cas de déplacements en translation, une longueur de course dans la plage de 0,5 % à 90 %, de préférence de 5% à 80 %, de manière davantage préférée de 10 % à 60 %, de manière préférée entre toutes de 20 % à 40 % par rapport à la longueur de course entière de l'outil (15) déplacé en translation.

3. Appareil (1) selon l'une des revendications précédentes, dans lequel la durée de la plage temporelle est au moins de 0,05 seconde, de préférence au moins de 0,1 seconde, de manière davantage préférée au moins de 0,2 seconde et de manière préférée entre toutes au moins de 0,3 seconde.

4. Appareil (1) selon l'une des revendications précédentes, dans lequel la modification de déplacement déclenchée est réalisée pendant la durée d'au moins 0,001 seconde, de préférence au moins de 0,1 seconde, de manière davantage préférée au moins de 0,2 seconde, de manière préférée entre toutes au moins de 0,3 seconde ; et/ou
dans lequel la modification de déplacement déclenchée est réalisée pendant une durée de 20 secondes maximum, de préférence de 15 secondes maximum, de manière davantage préférée de 10 secondes maximum, de manière préférée entre toutes de 5 secondes maximum.

5. Appareil (1) selon l'une des revendications précédentes, dans lequel l'outil (15) comprend une toupie à dents, une effeuilleuse, une barre de coupe, une brosse rotative ou un autre outil (15) approprié à une utilisation dans la viticulture et l'arboriculture fruitière.

6. Appareil (1) selon l'une des revendications précédentes, dans lequel la modification de déplacement de l'outil (15) est conçue afin de diminuer une résistance de déplacement de l'outil (15).

7. Appareil (1) selon l'une des revendications précédentes, dans lequel le dispositif de commande est conçu afin de réaliser la modification de déplacement de la manière suivante :
a) le déclenchement d'une inversion de déplacement et ensuite le déclenchement de précisément une autre inversion de déplacement ; ou
b) le déclenchement d'une inversion de déplacement et ensuite le déclenchement d'au moins deux autres inversions de déplacement à intervalles temporels de 0,5 seconde au plus, de préférence de 0,3 seconde au plus, de manière davantage préférée de 0,2 seconde au plus, de manière préférée entre toutes de 0,1 seconde au plus ; et/ou
c) le déclenchement d'une inversion de déplacement et ensuite le déclenchement d'au moins deux autres inversions de déplacement dans des intervalles croissants ou décroissants temporellement ; et/ou
d) le déclenchement d'une inversion de déplacement et ensuite le déclenchement d'autres inversions de déplacement dans des intervalles temporels de 0,5 seconde au plus, de préférence de 0,3 seconde au plus, de manière davantage préférée de 0,2 seconde au plus, de manière préférée entre toutes de 0,1 seconde au plus jusqu'à ce que l'au moins un paramètre mesurable n'atteigne pas la valeur limite.

8. Appareil (1) selon l'une des revendications précédentes, dans lequel la valeur de l'au moins un paramètre mesurable dépend de la résistance de déplacement de l'outil (15).

9. Appareil (1) selon l'une des revendications précédentes, dans lequel le paramètre est choisi de sorte que sa valeur augmente avec une résistance de déplacement croissante de l'outil (15) et diminue avec une résistance de déplacement décroissante de l'outil (15).

10. Appareil (1) selon l'une des revendications précédentes, dans lequel la valeur de l'au moins un paramètre mesurable est proportionnelle à la résistance de déplacement de l'outil (15).

11. Appareil (1) selon l'une des revendications précédentes 3 à 10 prise en combinaison avec la revendication 1, dans lequel l'au moins un paramètre mesurable est une pression hydraulique du dispositif d'entraînement (5) hydraulique ; et dans lequel de préférence la valeur limite réglable est d'au moins 20 bars, de préférence d'au moins 40 bars, de manière davantage préférée d'au moins 100 bars, de manière préférée entre toutes d'au moins 200 bars.

12. Appareil (1) selon l'une des revendications précédentes 3 à 10 prise en combinaison avec la revendication 2, dans lequel l'au moins un paramètre mesurable est un paramètre électrique du dispositif d'entraînement (5) électrique.

13. Appareil (1) selon l'une des revendications précédentes, **caractérisé en ce que** la plage temporelle ne correspond pas à la fréquence de balayage du dispositif de commande.

14. Véhicule porteur (20), en particulier destiné à un fonctionnement en agriculture, comprenant un appareil (1) selon l'une des revendications précédentes.
